# EUROPÄISCHE PATENTSCHRIFT

(11) **EP 2 618 114 B1**
(45) Veröffentlichungstag und Bekanntmachung des Hinweises auf die Patenterteilung: **04.03.2020**
(21) Anmeldenummer: 12151586.0
(22) Anmeldetag: 18.01.2012
(51) Int. Cl.: G01F 25/00, G01L 27/00, G05D 7/06, G05B 15/02, G05B 19/042, G06F 17/00

(54) **ABRUFEN VON MESSWERTEN, DIAGNOSEINFORMATIONEN ODER GERÄTEPARAMETERN**
RETRIEVAL OF MEASUREMENT VALUES, DIAGNOSIS INFORMATION OR DEVICE PARAMETERS
EXTRACTION DE VALEURS DE MESURE, D'INFORMATIONS DE DIAGNOSTIC OU DE PARAMÈTRES D'APPAREILS

(43) Veröffentlichungstag der Anmeldung: 24.07.2013
(73) Patentinhaber: VEGA Grieshaber KG, 77709 Wolfach (DE)
(72) Erfinder: FAIST, Fridolin, 77709 Oberwolfach (DE)
(74) Vertreter: Maiwald Patent- und Rechtsanwaltsgesellschaft mbH

(56) Entgegenhaltungen:
- DE-A1-102008 038 417
- DE-A1-102010 027 963
- US-A1- 2006 168 396
- US-A1- 2009 292 996

## Beschreibung

### Gebiet der Erfindung

Die Erfindung betrifft den Datenaustausch innerhalb eines Füllstandmesssystems, eines Druckmesssystems, eines Grenzstanderfassungsmesssystems und eines Durchflussmesssystems. Insbesondere betrifft die Erfindung ein Füllstandmesssystem, ein Druckmesssystem, ein Grenzstanderfassungsmesssystem und ein Durchflussmesssystem.

### Technischer Hintergrund

Die Inbetriebnahme bzw. Wartung von Feldgeräten erfolgt häufig rechnergestützt. Beispielsweise wird über eine Schnittstelle am Feldgerät, bei dem es sich um ein Füllstandmessgerät, ein Grenzstanderfassungsmessgerät, ein Druckmessgerät oder ein Durchflussmessgerät handeln kann, entweder direkt, z. B. über eine USB-Schnittstelle, oder über einen Kommunikationsadapter, eine Verbindung zu einem Laptop oder PC hergestellt, um über diese Verbindung Parametrierungen und/oder Diagnosen durchzuführen.

Ein solches Laptop oder ein solcher PC wird im Folgenden auch als Steuereinheit oder Bediengerät bezeichnet. Hierbei handelt es sich ganz allgemein um eine Recheneinheit, welche über eine entsprechende Datenverbindung mit dem Feldgerät kommunizieren kann, um eine Parametrierung oder ein Auslesen von Diagnose- oder Messdaten im Feldgerät durchzuführen.

Die Menge an zwischen der Steuereinheit und dem Feldgerät auszutauschenden Daten ist in vielen Fällen erheblich.

Dokument DE 10 2008 038 417 A1 beschreibt ein Verfahren zum Übertragen von gerätespezifischen Daten zwischen einem Feldgerät der Automatisierungstechnik und einer übergeordneten Steuereinheit.

DE 10 2010 027 963 A1 beschreibt ein Verfahren zum Betreiben eines Feldgeräts der Prozessautomatisierungstechnik.

### Zusammenfassung der Erfindung

Es ist eine Aufgabe der Erfindung, ein alternatives Verfahren zum Datenaustausch zwischen Steuereinheit und Füllstandmessgerät anzugeben.

Diese Aufgabe wird durch die Merkmale der unabhängigen Patentansprüche gelöst. Weiterbildungen der Erfindung ergeben sich aus den Unteransprüchen und aus der folgenden Beschreibung.

Die Erfindung ist in den unabhängigen Patentansprüchen angegeben. Im Speziellen betrifft die Erfindung ein Füllstandmesssystem gemäß Anspruch 1, ein Druckmesssystem gemäß Anspruch 8, ein Grenzstanderfassungsmesssystem gemäß Anspruch 9 und ein Durchflussmesssystem gemäß Anspruch 10.

An dieser Stelle sei darauf hingewiesen, dass Merkmale, die im Folgenden im Hinblick auf das Füllstandmesssystem genannt werden, auch in dem Druckmesssystem, dem Durchflussmesssystem, dem Grenzstanderfassungsmesssystem und als Verfahrensschritt in dem Verfahren und als Anweisung in den Programmelementen und dem computerlesbaren Medium implementiert werden können, und umgekehrt.

Insbesondere kann das Verfahren auch zum Laden von Geräteparametern, Messwerten und/oder Diagnoseinformationen in eine Bedienoberfläche einer Steuereinheit eines Druckmessgeräts, Grenzstanderfassungsmessgeräts oder Durchflussmessgeräts ausgeführt sein.

Gemäß einem ersten Aspekt der Erfindung ist ein Füllstandmesssystem angegeben, welches ein oder mehrere Füllstandmessgeräte und eine oder mehrere Steuereinheiten aufweist.

Darüber hinaus ist eine Kommunikationsschnittstelle zur Verbindung einer der Steuereinheiten mit zumindest einem der Füllstandmessgeräte vorgesehen.

Das Füllstandmessgerät ist ausgeführt zum Feststellen, ob sich ein aktueller Messwert, den das Füllstandmessgerät in einer Messung erfasst hat, von einem im Wert dieser Messung vorausgehenden Messung erfassten Messwert unterscheidet. Alternativ oder zusätzlich ist das Füllstandmessgerät ausgeführt festzustellen, ob sich eine aktuelle Diagnoseinformation, die das Füllstandmessgerät erzeugt hat, von einer dieser Diagnoseinformation vorausgehenden Diagnosefunktion unterscheidet. Alternativ oder zusätzlich ist das Füllstandmessgerät ausgeführt festzustellen, ob sich ein aktueller Geräteparameter aufgrund einer Änderung eines anderen Geräteparameters (innerhalb des Füllstandmessgeräts) verändert hat. Diese Feststellung kann beispielsweise anhand des Vergleichs des geänderten ("anderen") Geräteparameters mit einer im Füllstandmessgerät gespeicherten Liste, welche die Geräteparameter aufweist, von denen andere Geräteparameter abhängig sind, geschehen.

Die Steuereinheit ist ausgeführt zum Abrufen des aktuellen Messwerts, der aktuellen Diagnoseinformation und/oder des aktuellen Geräteparameters beim Füllstandmessgerät nur dann, wenn das Füllstandmessgerät einen Unterschied zwischen den Messwerten oder den Diagnoseinformationen oder eine Veränderung des Geräteparameters festgestellt hat.

Ändert also beispielsweise die Steuereinheit einen Geräteparameter im Füllstandmessgerät, so überprüft das Füllstandmessgerät, ob daraufhin (automatisch) ein anderer, aktueller Geräteparameter verändert wird, da er von dem von der Steuereinheit geänderten Geräteparameter abhängig ist. Ist dies der Fall, dann ruft die Steuereinheit den veränderten (weil abhängigen) Geräteparameter vom Füllstandmessgerät ab. Zusätzlich zum Abruf des veränderten (abhängigen) Geräteparameters kann eine ganze Parametergruppe oder der gesamte Parametersatz abgerufen werden.

Ähnlich verhält es sich bei der Diagnoseinformation und den Messwerten.

Auch hier ist es möglich, dass bei einer entsprechenden Veränderung von Diagnosedaten oder eines Messwerts ausschließlich diese veränderten Daten/Messwerte oder Daten(unter)gruppen oder ein gesamter Datensatz von der Steuereinheit abgerufen wird.

Gemäß einem weiteren Aspekt der Erfindung nimmt das Füllstandmessgerät die Feststellung nur dann vor, wenn ein neuer Messwert erfasst wurde und/oder wenn eine neue Diagnoseinformation erzeugt wurde und/oder wenn die Steuereinheit die Änderung eines Geräteparameters durch Schreiben des Geräteparameters in einen Speicher des Füllstandmessgeräts ausgelöst (also getriggert) hat.

Gemäß einem weiteren Aspekt der Erfindung übermittelt die Steuereinheit den veränderten Geräteparameter an das Füllstandmessgerät, bevor das Füllstandmessgerät die Feststellung vornimmt.

In anderen Worten löst die Steuereinheit die Änderung des Geräteparameters im Füllstandmessgerät aus. Daraufhin stellt dann das Füllstandmessgerät fest, ob sich aufgrund dessen ein weiterer ("aktueller") Geräteparameter ebenfalls verändert hat.

Gemäß einem weiteren Aspekt der Erfindung vermerkt das Füllstandmessgerät, wenn es feststellt, dass sich der aktuelle Messwert, die aktuelle Diagnoseinformation und/oder der aktuelle Geräteparameter verändert haben, dies in einem sog. Merker. Hierbei kann es sich um ein Bit oder eine Bitfolge handeln, die überwacht werden kann. Die Steuereinheit ruft den Merker ab und prüft den Merker. Daraufhin kann sie dann die Entscheidung treffen, ob ein Abrufen des aktuellen Messwerts, der aktuellen Diagnoseinformation oder des aktuellen Geräteparameters beim Füllstandmessgerät zu erfolgen hat oder nicht.

Gemäß einem weiteren Aspekt der Erfindung erfolgt das Feststellen, ob sich der aktuelle Geräteparameter aufgrund einer Änderung eines anderen Geräteparameters verändert hat (oder nicht), durch Identifikation des anderen Geräteparameters in einer dafür vorgesehenen Liste.

Gemäß einem weiteren Aspekt der Erfindung ruft die Steuereinheit einen vollständigen Geräteparametersatz beim Füllstandmessgerät ab, wenn das Füllstandmessgerät eine Veränderung des aktuellen Geräteparameters festgestellt hat.

Gemäß einem weiteren Aspekt der Erfindung überprüft die Steuereinheit, ob das Füllstandmessgerät die Feststellung bereits vorgenommen hat.

Gemäß einem weiteren Aspekt der Erfindung teilt das Füllstandmessgerät der Steuereinheit selbstständig mit, wenn es die Feststellung vorgenommen hat.

Dies kann beispielsweise durch Übermittlung des entsprechenden Merkers an die Steuereinheit erfolgen, die daraufhin den Merker mit dem entsprechenden früheren, in der Steuereinheit gespeicherten Merker vergleicht, um festzustellen, ob Änderungen erfolgt sind oder nicht.

Gemäß einem weiteren Aspekt, der nicht Teil der Erfindung ist, ist ein Verfahren zum Laden von Geräteparametern, Messwerten und/oder Diagnoseinformationen in eine Bedienoberfläche einer Steuereinheit eines Füllstandmessgeräts, eines Druckmessgeräts, eines Durchflussmessgeräts und/oder eines Grenzstanderfassungsmessgeräts angegeben. Zunächst stellt das Messgerät fest, ob sich ein aktueller Messwert, den das Messgerät in einer Messung erfasst hat, von einem in dieser Messung vorausgehenden Messung erfassten Messwert unterscheidet, ob sich eine aktuelle Diagnoseinformation, die das Messgerät erzeugt hat, von einer dieser Diagnoseinformation vorausgehenden Diagnoseinformation unterscheidet und/oder ob sich ein aktueller Geräteparameter aufgrund einer Änderung eines anderen Geräteparameters verändert hat. Daraufhin erfolgt ein Abrufen des aktuellen Messwerts, der aktuellen Diagnoseinformation und/oder des aktuellen Geräteparameters beim Messgerät, und zwar durch die Steuereinheit. Dieses Abrufen erfolgt nur dann, wenn das Messgerät einen Unterschied zwischen den Messwerten oder zwischen den Diagnoseinformationen und/oder eine Veränderung des Geräteparameters festgestellt hat.

Gemäß einem weiteren Aspekt, der nicht Teil der Erfindung ist, sind Programmelemente angegeben, die, wenn sie auf Prozessoren in einem Füllstandmesssystem, einem Druckmesssystem, einem Grenzstanderfassungsmesssystem und/oder einem Durchflussmesssystem ausgeführt werden, ein entsprechendes Messgerät des Messsystems anleiten, einen oder mehrere der folgenden Schritte durchzuführen: Feststellen, ob sich ein aktueller Messwert, den das Messgerät in einer Messung erfasst hat, von einem in der dieser Messung vorausgehenden Messung erfassten Messwert unterscheidet; Feststellen, ob sich eine aktuelle Diagnoseinformation, die das Messgerät erzeugt hat, von einer dieser Diagnoseinformation vorausgehenden Diagnoseinformation unterscheidet; Feststellen, ob sich ein aktueller Geräteparameter aufgrund einer Änderung eines anderen Geräteparameters verändert hat.

Weiterhin leiten die Programmelemente eine Steuereinheit des Messsystems an, den aktuellen Messwert, die aktuelle Diagnoseinformation und/oder den aktuellen Geräteparameter beim Messgerät nur dann abzurufen, wenn das Messgerät einen Unterschied zwischen den Messwerten oder den Diagnoseinformationen und/oder eine Veränderung des Geräteparameters festgestellt hat.

Gemäß einem weiteren Aspekt, der nicht Teil der Erfindung ist, ist ein computerlesbares Medium angegeben, auf dem die oben und im Folgenden beschriebenen Programmelemente gespeichert sind.

In anderen Worten sind die Programmelemente in der Lage, die Messgeräte und Steuereinheiten der entsprechenden Messsysteme anzuleiten, die oben und im Folgenden beschriebenen Verfahrensschritte durchzuführen.

Gemäß einem weiteren Aspekt der Erfindung ist ein Grenzstanderfassungssystem angegeben, welches ein Grenzstanderfassungsgerät und eine Steuereinheit aufweist.

Gemäß einem weiteren Aspekt der Erfindung ist ein Durchflussmesssystem angegeben, welches ein Durchflussmessgerät und eine Steuereinheit aufweist. Gemäß einem weiteren Aspekt der Erfindung ist ein Druckmesssystem angegeben, welches ein Druckmessgerät und eine Steuereinheit aufweist.

Die Messgeräte der oben genannten Systeme sind dabei in der Lage, die oben beschriebenen "Messgeräteschritte" durchzuführen und die Steuereinheit ist in der Lage, die oben beschriebenen "Steuereinheitsschritte" durchzuführen.

Dabei können die Programmelemente z. B. Teile einer Software sein, die auf Prozessoren des entsprechenden Messgeräts und der Steuereinheit gespeichert sind.

Im Folgenden werden mit Verweis auf die Figuren Ausführungsbeispiele der Erfindung beschrieben.

Kurze Beschreibung der Figuren
Fig. 1 zeigt ein Messsystem gemäß einem ersten Ausführungsbeispiel der Erfindung.
Fig. 2 zeigt ein Messsystem gemäß einem weiteren Ausführungsbeispiel der Erfindung.
Fig. 3A zeigt ein Flussdiagramm eines Verfahrens zum Lesen eines Parametersatzes aus einem Messgerät.
Fig. 3B zeigt ein Flussdiagramm eines Verfahrens zum Ändern eines Parametersatzes.
Fig. 4 zeigt ein Messsystem gemäß einem Ausführungsbeispiel der Erfindung.
Fig. 5 zeigt ein Flussdiagramm eines Verfahrens zum Ändern eines Parametersatzes in einem Messgerät.
Fig. 6 zeigt ein Flussdiagramm eines Verfahrens zur Bereitstellung von Diagnosewerten.
Fig. 7 zeigt ein Flussdiagramm eines Verfahrens von zyklischem Auslesen von Diagnosewerten für Bedienprogramme.
Fig. 8 zeigt ein Beispiel für einen Änderungszähler zur Überwachung kompletter Datensätze.
Fig. 9 zeigt ein Beispiel für Änderungszähler zur Überwachung einzelner Parametergruppen.
Fig. 10 zeigt die Verwendung eines Merkers zum Signalisieren, dass ein geschriebener Parameter Abhängigkeiten hat.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

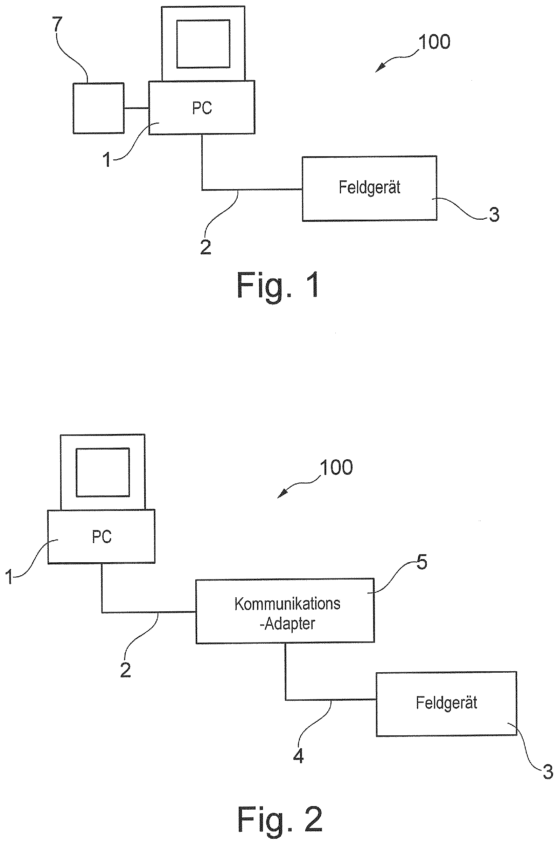

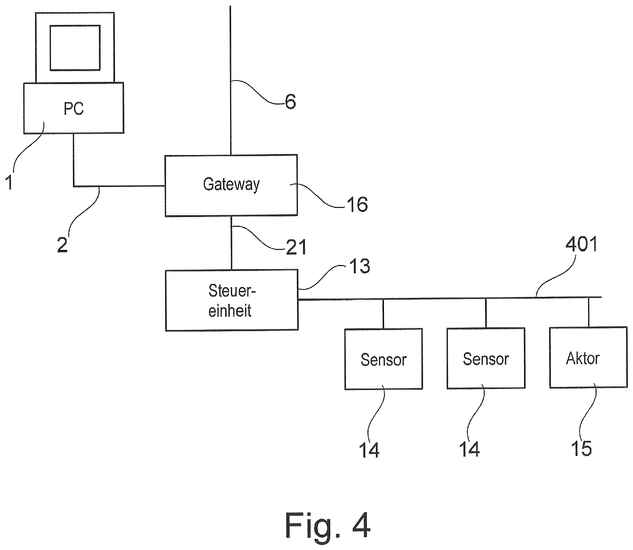

Fig. 1 zeigt (wie auch die Fig. 2 und 4) ein Messsystem, beispielsweise ein Füllstand-, Druck- oder Durchflussmesssystem oder ein Grenzstanderfassungssystem gemäß Ausführungsbeispielen der Erfindung.

In der Prozessautomation können intelligente Geräte mit Schnittstellen zur digitalen Kommunikation eingesetzt werden. Diese Geräte werden über diese Schnittstellen mit einem Standard-PC verbunden und können somit über grafische Bedienoberflächen bedient werden. Besonders vorteilhaft für die Bedienung mag es sein, wenn die Bedienabläufe mit einer optimalen Performance vonstatten gehen. Damit dies ermöglicht wird, ist ein Verfahren erforderlich, das nur die nötigsten Geräteparameter zwischen Bedienoberfläche und Geräten austauscht. Ferner muss auch darauf geachtet werden, dass auf den Bussystemen, über welche die verschiedenen Geräte miteinander verbunden sind, kein unnötiges Datenaufkommen entsteht.

Die Erfindung betrifft Vorrichtungen zum Optimieren des Kommunikationsaufkommens zwischen Messgeräten und Bedienoberfläche.

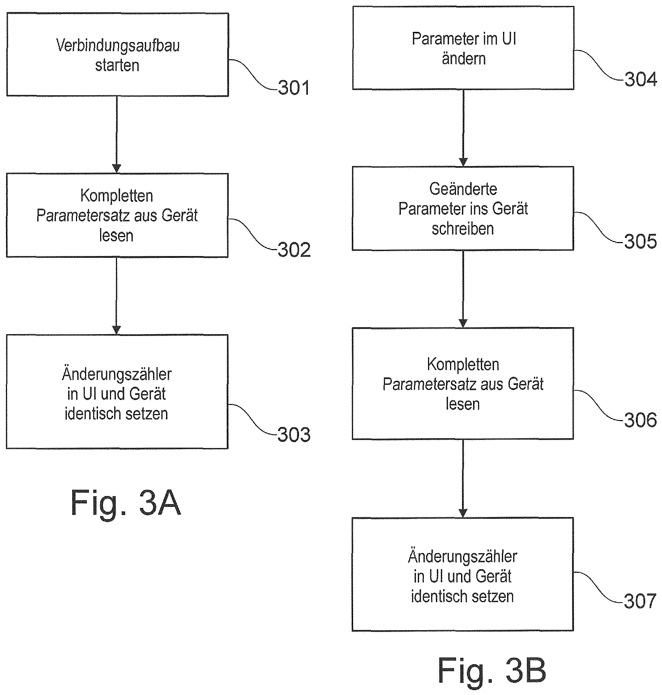

Um für den Anwender eine flüssige Bedienung auf der Benutzeroberfläche zu ermöglichen, werden typischerweise beim ersten Verbindungsaufbau komplett alle, für die Bedienoberfläche relevanten Geräteparameter geladen, wie dies beispielsweise in den Fig. 3A und 3B gezeigt ist.

Derartige Messsysteme weisen ein Bedienwerkzeug 1, beispielsweise in Form eines Personal Computers, und ein Mess- bzw. Feldgerät 3 auf. Das Messgerät 3 und der PC 1 sind über eine Schnittstelle 2 miteinander verbunden, um Daten austauschen zu können. Weiterhin weist der PC 1 des Systems 100 einen Speicher 7 auf, auf dem beispielsweise erfindungsgemäße Programmelemente gespeichert sind.

Auch kann zwischen dem Feldgerät 3 und dem PC 1 ein Kommunikationsadapter 5 vorgesehen sein, an dem der PC 1 über die Schnittstelle 2 angeschlossen ist, und der im Gegenzug über die Schnittstelle 4 mit dem Feldgerät 3 verbunden ist (siehe Fig. 2).

Im Schritt 301 der Fig. 3A wird der Verbindungsaufbau zwischen dem PC 1 und dem Messgerät 3 gestartet. Im Schritt 302 wird ein kompletter Parametersatz aus dem Messgerät gelesen. Nach erfolgtem "Lesen der Gerätedaten" kann dann in der Bedienoberfläche der Recheneinheit von Dialog zu Dialog gesprungen werden, ohne dass durch Nachladen von Geräteparametern eine stockende Bedienung entsteht. Dieser Ablauf kann bei Bedienoberflächen mit Schnittstelle nach dem FDT-Standard (z. B. PACTware mit DTM) erfolgen.

Je nach Art der verwendeten Geräteschnittstelle kann der Ladevorgang jedoch mehrere Minuten in Anspruch nehmen. Zusätzlich kann nach dem Laden ein Änderungszähler in der Bediensoftware berechnet und sowohl ins Messgerät geschrieben als auch zusammen mit dem Gerätedatensatz auf dem PC gespeichert werden. Dies ermöglicht es der Bediensoftware, dass bei einem späteren Verbindungsaufbau nur der Änderungszähler abgeprüft werden muss. Stimmt dieser mit dem Änderungszähler im Messgerät überein, so kann auf das "Lesen der Gerätedaten" verzichtet werden. Bei einigen Geräten und Bedienprogrammen kann der Gerätedatensatz in einzelne Untergruppen von Parametern aufgeteilt werden. Für jede Parametergruppe wird beispielsweise ein individueller Änderungszähler zur Überwachung von Änderungen eingesetzt.

Danach werden im Schritt 303 die Änderungszähler im PC und im Messgerät identisch gesetzt.

Werden im Schritt 304 Parameter in der Bedienoberfläche geändert, so werden beim "Schreiben in das Gerät" zwar nur genau die geänderten Parameter geschrieben (Schritt 305), es müssen aber aus Sicherheitsgründen unmittelbar nach dem Schreiben wieder komplett alle, für die Bedienoberfläche relevanten Geräteparameter aus dem Gerät gelesen (also in den PC geladen) werden, siehe Schritt 306. Dies ist erforderlich, da beim Schreiben einzelner Parameter ins Messgerät unter Umständen weitere abhängige Parameter im Messgerät verändert werden, von denen die Bedienoberfläche nichts weiß. Auch hier kann der Ladevorgang mehrere Minuten dauern.

Daraufhin können im Schritt 307 wieder die Änderungszähler im PC und im Messgerät identisch gesetzt werden.

Bei anderen Bedienoberflächen, die z. B. nach dem EDD-Standard (beispielsweise PDM von Siemens oder AMS von Emerson) arbeiten, können beispielsweise nur genau die Geräteparameter geladen werden, die zum aktuell geöffneten Dialog im Bedienprogramm, das auf der Bedienoberfläche des PCs ausgeführt wird, erforderlich sind.

Für die Anzeige von Messwerten und Diagnoseinformationen fragen die Systeme sämtliche anzuzeigende Werte zyklisch ab. Um das Datenaufkommen zu reduzieren, können Schalter vorgesehen sein, mit denen die Intervallzeit für den Abfragezyklus gesteuert werden kann.

Fig. 4 zeigt ein weiteres Ausführungsbeispiel eines Messsystems, bei dem der PC 1 über die Schnittstelle 2 mit einem Gateway 16 verbunden ist, welches über die Schnittstellen 6, 21 beispielsweise mit einer Steuereinheit 13 verbunden ist. Die Steuereinheit 13 ist an eine Busverbindung 401 angeschlossen, an welche auch die Sensoren 14 und der Aktor 15 angeschlossen ist.

Speziell das Ändern von Geräteparametern mit dem anschließenden "Schreiben in das Messgerät" kann unnötig zeitaufwändig sein. Je nach vorhandener Netzwerkstruktur, in welche die Messgeräte integriert sind, können hier schnell mehrere Minuten an Wartezeit erforderlich sein. Dies kann z. B. der Fall sein, wenn, wie in der Fig. 4 gezeigt, der PC 1 zur Bedienung über ein Gateway 16 und eine Steuereinheit 13 mit den Feldgeräten 14, 15 verbunden wird. Insbesondere, wenn dann noch als Busverbindung 401 eine Busverbindung vom Typ HART oder Wireless HART vorgesehen ist.

Aber auch bei Profibus, Foundation Fieldbus und anderen Verbindungen werden bei zunehmender Anzahl von Feldgeräten die Reaktionszeiten unangenehm hoch. Entsprechendes gilt für die Komplexität der Netzwerkstruktur. Wenn über mehrere Netzwerkebenen kommuniziert werden muss, so leidet die Performance oft erheblich.
Diese Problematik kann besonders bei Bedienoberflächen auftreten, die nach dem FDT-Standard arbeiten. Andere Konzepte, wie beispielsweise nach dem EDD-Standard arbeitende Systeme, laden grundsätzlich zwar nur die Parameter, die im jeweiligen Dialog des User Interfaces (UI) erforderlich sind. Dies hat allerdings den Nachteil, dass bei jedem Dialogwechsel zunächst Daten hochgeladen werden müssen. Auch hierbei kann schnell eine Wartezeit von mehreren Sekunden auftreten. Weiterhin kann es oft schwierig sein, ein konsistentes Abbild der kompletten Gerätedaten auf dem PC zu erhalten, da jeweils immer nur Teile geladen werden.

Im Falle des zyklischen Abfragens von Messwerte bzw. Diagnoseinformationen kann zwar durch Hochsetzen der Intervallzeiten zwischen den verschiedenen Datenaustauschen das Datenaufkommen reduziert werden. Dies führt allerdings auch zu verzögerter Anzeige von Zuständen, was unter Umständen in der Praxis unzulässig ist.

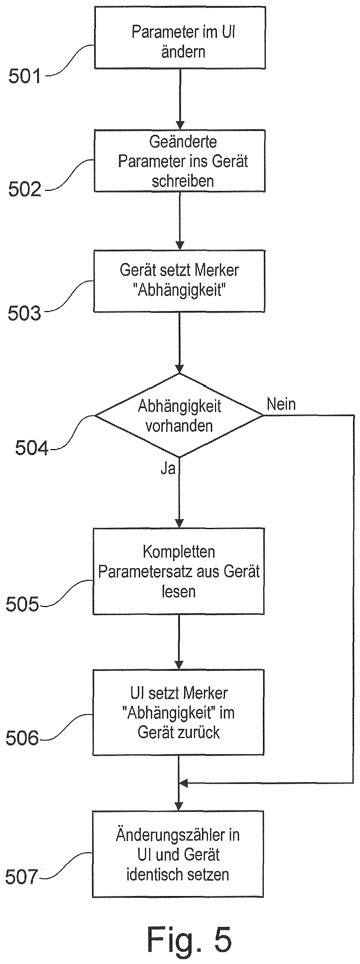

Die erfindungsgemäße Anordnung und das nutzen einen sog. "Merker" in den Messgeräten. Dieser Merker informiert das jeweilige Bedienprogramm darüber, ob durch das "Schreiben in das Messgerät" andere Parameter beeinflusst wurden. Wenn das nicht der Fall ist, so kann auf das Zurücklesen von Parametern in das Bedienprogramm komplett verzichtet werden (siehe Fig. 5). Wenn man davon ausgeht, dass sowieso nur ein kleiner Anteil der Geräteparameter Abhängigkeiten aufweist, so wird das Ändern von Parametern in den meisten Fällen mit maximaler Performance vonstatten gehen. Bei Systemen, die nach dem FDT-Standard arbeiten, erhält man auf diese Weise ohne zusätzliche Wartezeiten immer konsistente Daten auf dem PC.

Auch im Falle der EDD-basierten Systeme müssten nicht alle auf einem Dialog vorhandenen Parameter geschrieben und zurückgeladen werden. Auch hier wäre es ausreichend, genau den geänderten Parameter zu schreiben, den Merker zu prüfen und, sofern keine Abhängigkeit angezeigt wird, nur noch den geänderten Wert in den PC zurückzulesen.

Das Verfahren zur Reduzierung des Datenaufkommens für Messwert- und Diagnoseabfragen reduziert somit das Datenaufkommen dynamisch, abhängig vom tatsächlichen Grad an Änderungen im System. Es bleibt also grundsätzlich die maximale Reaktionszeit erhalten.

Im Schritt 501 werden Parameter (Geräteparameter) in der Benutzerschnittstelle (Steuereinheit 1, 13) geändert. Im Schritt 502 werden dann die geänderten Parameter ins Messgerät geschrieben. Im Schritt 503 setzt das Messgerät, je nach Zustand, den Merker "Abhängigkeit" TRUE bzw. auf FALSE und im Schritt 504 wird im Messgerät anhand des Merkers überprüft, ob eine solche Abhängigkeit vorhanden ist. Ist dies nicht der Fall, so folgt Schritt 507, bei welchem der Änderungszähler in der Benutzerschnittstelle und im Messgerät identisch gesetzt werden. Sind Abhängigkeiten vorhanden, so folgt Schritt 505, bei welchem der komplette Parametersatz aus dem Gerät gelesen wird. Im Schritt 506 setzt die Benutzerschnittstelle den Merker "Abhängigkeit" im Messgerät zurück, woraufhin im Schritt 507 die Änderungszähler in der Benutzerschnittstelle und im Messgerät identisch gesetzt werden.

In der Prozessautomatisierung werden für die Bedienung von Steuerungen, Kommunikationskomponenten und Feldgeräten, die üblicherweise über ein Bussystem mit einem Computer (PC, Laptop oder Ähnliches) verbunden sind, Bedienprogramme eingesetzt. Wie bereits oben beschrieben, handelt es sich dabei üblicherweise um FDT-Rahmenapplikationen, FDI-Hosts bzw. um DD-Hosts. Insbesondere die FDT-Rahmenanwendungen können nicht nur für die gängigsten normierten Bussysteme eingesetzt werden. Sie erlauben auch den Einsatz an den Konfigurationsschnittstellen von Geräten, wenn darüber private Protokolle kommuniziert werden.

Diesen Systemen gemeinsam ist, dass sie für sich gesehen noch nicht nutzbar sind. Die Nutzbarkeit wird erst dadurch erreicht, dass für die zu bedienenden Geräte die zugehörigen Gerätetreiber geladen werden. Im Fall FDT sind dies die sog. DTM, im Falle der DD-Hosts die DD.

Die Gerätetreiber erhalten die eigentliche Bedienoberfläche für die jeweiligen Geräte und in ihnen stecken auch die zu den Geräten passenden Kommunikationsmechanismen.

Demnach sind Maßnahmen an den Geräten und an den Gerätetreibern erforderlich.

In den Geräten wird beispielsweise eine Funktion ergänzt, die dann den Merker "Abhängigkeit" setzt, wenn im Gerät ein Parameter manipuliert wird, der aufgrund von Abhängigkeiten andere Parameter beeinflusst. Das kann z. B. durch Ändern einer globalen Gerätemaßeinheit hervorgerufen werden oder durch Ändern des Anwendungstyps. Der Merker bleibt so lange gesetzt, bis ein Bedienprogramm diesen zurücksetzt. Um Kenntnis darüber zu haben, ob Parameter Abhängigkeiten zu anderen Parametern haben, können die im Gerät angelegten Parameter beispielsweise jeweils eine entsprechende Kennzeichnung erhalten, die dann von der oben erwähnten Funktion ausgewertet wird.

In den Gerätetreibern muss nach dem Schreiben von geänderten Parametern ins Gerät geprüft werden, ob das Gerät "Abhängigkeiten" meldet. Wenn dies nicht der Fall ist, so ist der Vorgang abgeschlossen. Je nach Sicherheitsphilosophie kann der geschriebene Parameter nochmals zurückgelesen werden. Werden Abhängigkeiten gemeldet, so kann anhand der Änderungszähler geprüft werden, welche Parametergruppen zurückgelesen werden müssen, oder es wird grundsätzlich der komplette Parametersatz zurückgelesen. Im Anschluss wird dann der Merker "Abhängigkeit" im Gerät wieder zurückgesetzt. Im Falle der DTM werden dann typischerweise auch die Änderungszähler im Gerät wieder in Übereinstimmung gebracht. Somit ist der komplette Datensatz im DTM und im Gerät wieder konsistent und auch als solcher gekennzeichnet. Mit von Vorteil bei diesem Vorgehen ist, dass das Bedienprogramm keinerlei Kenntnis über die Abhängigkeiten der Parameter haben muss. Diese sind an einer zentralen Stelle gepflegt und werden auch bei Änderungen durch Softwareupdates so immer aktuell in dem Bedienprogramm behandelt, ohne dass das Bedienprogramm aktualisiert werden muss.

Typischerweise bieten die Gerätetreiber auch Dialoge und Anzeigefenster für die Anzeige von Messwerten und Diagnoseinformationen. Diese werden in der Regel zyklisch abgefragt, damit im Dialog- bzw. Anzeigefenster stets aktuelle Werte angezeigt werden. Bei den heute immer komplexer werdenden Geräten verursacht die Menge der verschiedenen Messwertinformationen und Diagnoseinformationen durchaus einen beträchtlichen Anteil an Kommunikationsaufkommen, das aufgrund von begrenzter Bandbreite auf den Bussystemen zu erheblichen Problemen führen kann.

D. h. auch für diese Informationstypen ist die Einführung eines Änderungsmerkmals von großem Vorteil, da es dadurch ausreichen würde, pro Zyklus den Änderungsstatus abzufragen und nur bei tatsächlich geändertem Inhalt auch tatsächlich die kompletten Messwerte und Diagnosen auszulesen.

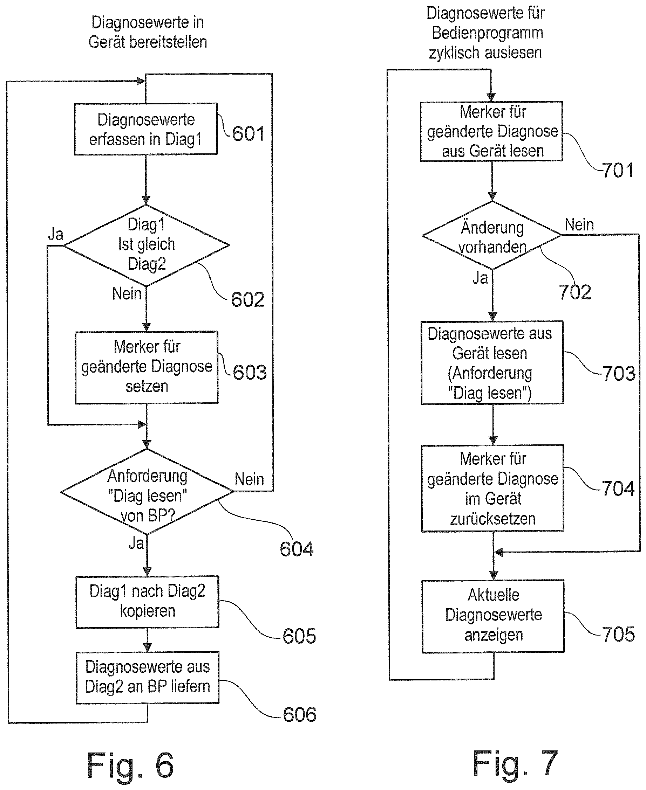

Fig. 6 zeigt exemplarisch ein Verfahren für Feldgeräte, wonach diese zyklisch ihre Diagnosewerte in einem Puffer "Diag 1" bereitstellen und den Merker "geänderte Diagnosewerte" setzen, falls geänderte Werte erkannt werden. Nur wenn konkret die Leseanforderung der Diagnosewerte durch das Bedienprogramm eintrifft, werden die Daten in den Puffer "Diag 2" kopiert und der Inhalt von Diag 2 an das Bedienprogramm geliefert.

In anderen Worten erfolgt im Schritt 601 das Erfassen der Diagnosewerte in Diag 1 und im Schritt 602 wird festgestellt, ob Diag 1 gleich Diag 2 ist. Ist dies nicht der Fall, folgt Schritt 603, bei dem der Merker für geänderte Diagnose gesetzt wird. Wird im Schritt 602 hingegen festgestellt, dass Diag 1 gleich Diag 2 ist, folgt Schritt 604 direkt (Setzen des Merkers für geänderte Diagnose, Schritt 606 entfällt also). Im Schritt 604 wird festgestellt, ob das Bediengerät an das Messgerät die Anforderung "Diag lesen" geschickt hat. Ist dies nicht der Fall, geht es weiter mit Schritt 601. Ist dies sehr wohl der Fall, folgt Schritt 605, bei welchem Diag 1 nach Diag 2 kopiert wird. Daraufhin folgt Schritt 606, bei dem die Diagnosewerte aus Diag 2 an das Bediengerät geliefert werden. Das Verfahren startet dann neu mit Schritt 601.

Fig. 7 zeigt einen Ablauf für das Bedienprogramm. Das Bedienprogramm liest zyklisch den Merker für geänderte Diagnosen im Messgerät aus (Schritt 701). Solange dieser nicht gesetzt ist (dies wird im Schritt 702 überprüft), werden keine weiteren Daten zur Diagnose abgefragt und die Darstellung im Diagnosefenster des Bedienprogramms bleibt unverändert (Schritt 705). Nur wenn der Merker Änderungen meldet, werden die Diagnosewerte aus dem Messgerät im Schritt 703 gelesen (Anforderung "Diag lesen") und im Schritt 704 wird der Merker für geänderte Diagnose im Messgerät zurückgesetzt. Daraufhin werden im Schritt 705 die aktuellen Diagnosewerte angezeigt.

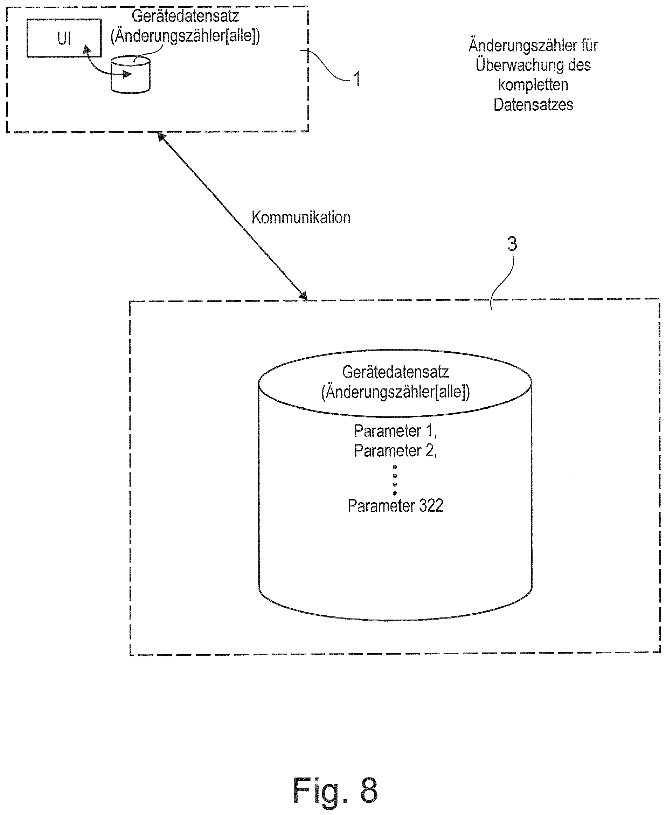

Fig. 8 zeigt die Kommunikation zwischen einem Bedienwerkzeug bzw. einer Steuereinheit 1 und einem Feldgerät 3. Der im Feldgerät vorhandene Änderungszähler wird für die Überwachung des kompletten, im Feldgerät gespeicherten Datensatzes verwendet. Zeigt dieser Zähler eine Änderung an, wird der komplette Datensatz in die Steuereinheit 1 geladen.

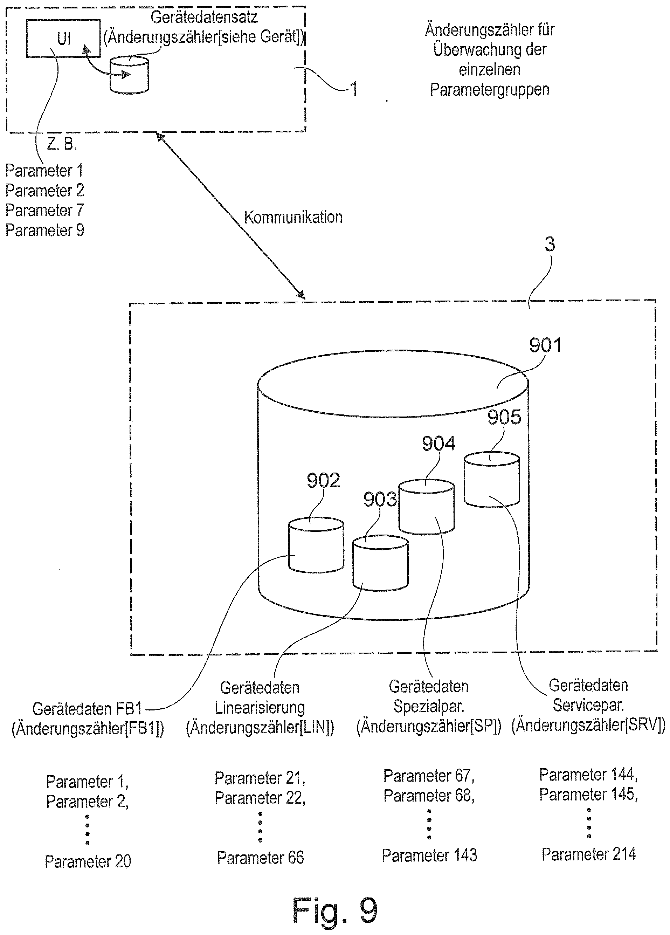

Wie aus Fig. 9 zu sehen, können auch Parametergruppen im Feldgerät 3 gebildet werden, welche zusammengenommen den Gerätedatensatz 901 bilden. Bei diesen Parametergruppen handelt es sich beispielsweise um die Gerätedaten FB1 902, die Gerätedaten Linearisierung 903, die Gerätedaten Spezialparameter 904 und die Gerätedaten Serviceparameter 905.

Jede Parametergruppe 902 bis 905 weist einen eigenen Zähler oder Merker auf, der beispielsweise mit dem Wert 1 vorinitialisiert ist. Wird ein Parameter in einer der Gruppen geändert, wird der entsprechende Änderungszähler (Merker) angehoben. Der Änderungszähler bzw. alle Änderungszähler (im Beispiel der Fig. 9 sind dies vier) werden bei einem bestimmten Zeitpunkt in das Bediengerät 1 geladen und das Bediengerät entscheidet dann, welche Parametergruppe vom Feldgerät in das Bediengerät hochgeladen werden soll. Die Zählerstände der Änderungszähler werden im Bediengerät gespeichert und mit den neu hochgeladenen Zählerständen verglichen. Auf diese Weise kann im Bediengerät festgestellt werden, ob sich in einer Parametergruppe etwas geändert hat oder nicht.

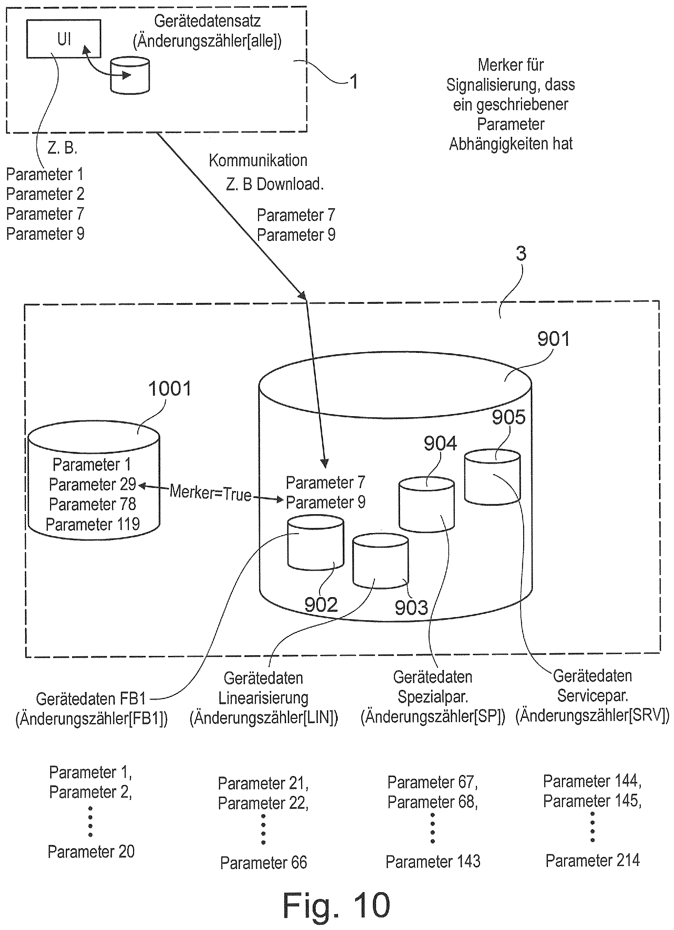

Allerdings führt nicht jede Parameteränderung automatisch auch zu einer Änderung anderer Parameter im Feldgerät. Im Feldgerät kann eine Liste der abhängigen Parameter 1001 gespeichert sein, welche im Beispiel der Fig. 10 die Parameter 7, 29, 78 und 119 aufweist.

Das Feldgerät kann anhand dieser Liste überprüfen, ob sich andere Parameter aufgrund der Änderung eines Parameters geändert haben oder geändert werden. Ist dies der Fall, kann der entsprechende Änderungszähler der Parametergruppe geändert werden.

Daraufhin werden alle vier Änderungszähler in das Bediengerät 1 hochgeladen und dort mit dem vorhergehenden Änderungszähler verglichen. Das Bediengerät kann dann feststellen, ob sich einer der Änderungszähler verändert hat. Ist dies der Fall, kann die entsprechende Parametergruppe vom Bediengerät 1 angefordert und hochgeladen werden.

## Patentansprüche

1. Füllstandmesssystem (100), aufweisend:
ein Füllstandmessgerät (3, 14); und
eine über eine Kommunikationsschnittstelle mit dem Füllstandmessgerät verbundene Steuereinheit (1, 13);
wobei das Füllstandmessgerät ausgeführt ist zum:
- Feststellen, ob sich ein aktueller Messwert, den das Füllstandmessgerät in einer Messung erfasst hat, von einem in einer dieser Messung vorausgehenden Messung erfassten Messwert unterscheidet; oder
- Feststellen, ob sich eine aktuelle Diagnoseinformation, die das Füllstandmessgerät erzeugt hat, von einer dieser Diagnoseinformation vorausgehenden Diagnoseinformation unterscheidet; oder
- Feststellen, ob sich ein aktueller Geräteparameter aufgrund einer Änderung eines anderen Geräteparameters verändert hat;
wobei das Füllstandmessgerät (3, 14) ferner dazu ausgeführt ist, wenn es feststellt, dass sich der aktuelle Messwert, die aktuelle Diagnoseinformation oder der aktuelle Geräteparameter verändert hat, dies in einem Merker zu vermerken;
wobei die Steuereinheit ausgeführt ist zum:
- Abrufen und Prüfen des Merkers;
- Treffen einer Entscheidung nach Prüfen des Merkers, ob ein Abrufen des aktuellen Messwerts, der aktuellen Diagnoseinformation oder des aktuellen Geräteparameters beim Füllstandmessgerät erfolgt oder nicht; und
- Abrufen des aktuellen Messwerts, der aktuellen Diagnoseinformation oder des aktuellen Geräteparameters beim Füllstandmessgerät nur dann, wenn das Füllstandmessgerät einen Unterschied zwischen den Messwerten oder den Diagnoseinformationen oder eine Veränderung des Geräteparameters festgestellt hat.

2. Füllstandmesssystem nach Anspruch 1,
wobei die Steuereinheit (1, 13) dazu ausgeführt ist, den anderen Geräteparameter an das Füllstandmessgerät (3, 14) zu übermitteln, bevor das Füllstandmessgerät die Feststellung vornimmt.

3. Füllstandmesssystem nach einem der vorhergehenden Ansprüche,
wobei das Füllstandmessgerät dazu ausgeführt ist, durch Identifikation des anderen Geräteparameters in einer dafür vorgesehenen Liste festzustellen, ob sich der aktuelle Geräteparameter aufgrund der Änderung des anderen Geräteparameters verändert hat.

4. Füllstandmesssystem nach einem der vorhergehenden Ansprüche,
wobei das Füllstandmessgerät (3, 14) dazu ausgeführt ist das Feststellen nur dann vorzunehmen, wenn ein neuer Messwert erfasst wurde, wenn eine neue Diagnoseinformation erzeugt wurde, oder wenn die Steuereinheit die Änderung eines Geräteparameters durch Schreiben des Geräteparameters in einen Speicher des Füllstandmessgeräts ausgelöst hat.

5. Füllstandmesssystem nach einem der vorhergehenden Ansprüche,
wobei die Steuereinheit (1, 13) dazu ausgeführt ist, einen vollständigen Geräteparametersatz beim Füllstandmessgerät abzurufen, wenn das Füllstandmessgerät eine Veränderung des aktuellen Geräteparameters festgestellt hat.

6. Füllstandmesssystem nach einem der vorhergehenden Ansprüche,
wobei die Steuereinheit (1, 13) dazu ausgeführt ist, zu überprüfen, ob das Füllstandmessgerät (3, 14) die Feststellung vorgenommen hat.

7. Füllstandmesssystem nach einem der Ansprüche 1 bis 6,
wobei das Füllstandmessgerät (3, 14) dazu ausgeführt ist, der Steuereinheit (1, 13) selbstständig mitzuteilen, wenn es die Feststellung vorgenommen hat.

8. Druckmesssystem (3, 14), aufweisend:
ein Druckmessgerät; und
eine über eine Kommunikationsschnittstelle mit dem Druckmessgerät verbundene Steuereinheit;
wobei das Druckmessgerät ausgeführt ist zum:
- Feststellen, ob sich ein aktueller Messwert, den das Druckmessgerät in einer Messung erfasst hat, von einem in einer dieser Messung vorausgehenden Messung erfassten Messwert unterscheidet; oder
- Feststellen, ob sich eine aktuelle Diagnoseinformation, die das Druckmessgerät erzeugt hat, von einer dieser Diagnoseinformation vorausgehenden Diagnoseinformation unterscheidet; oder
- Feststellen, ob sich ein aktueller Geräteparameter aufgrund einer Änderung eines anderen Geräteparameters verändert hat;
wobei das Druckmessgerät (3, 14) ferner dazu ausgeführt ist, wenn es feststellt, dass sich der aktuelle Messwert, die aktuelle Diagnoseinformation oder der aktuelle Geräteparameter verändert hat, dies in einem Merker zu vermerken;
wobei die Steuereinheit ausgeführt ist zum:
- Abrufen und Prüfen des Merkers;
- Treffen einer Entscheidung nach Prüfen des Merkers, ob ein Abrufen des aktuellen Messwerts, der aktuellen Diagnoseinformation oder des aktuellen Geräteparameters beim Druckmessgerät erfolgt oder nicht; und
- Abrufen des aktuellen Messwerts, der aktuellen Diagnoseinformation oder des aktuellen Geräteparameters beim Druckmessgerät nur dann, wenn das Druckmessgerät einen Unterschied zwischen den Messwerten oder den Diagnoseinformationen oder eine Veränderung des Geräteparameters festgestellt hat.

9. Grenzstanderfassungssystem (3, 14), aufweisend:
ein Grenzstanderfassungsgerät; und
eine über eine Kommunikationsschnittstelle mit dem Grenzstanderfassungsgerät verbundene Steuereinheit;
wobei das Grenzstanderfassungsgerät ausgeführt ist zum:
- Feststellen, ob sich ein aktueller Messwert, den das Grenzstanderfassungsgerät in einer Messung erfasst hat, von einem in einer dieser Messung vorausgehenden Messung erfassten Messwert unterscheidet; oder
- Feststellen, ob sich eine aktuelle Diagnoseinformation, die das Grenzstanderfassungsgerät erzeugt hat, von einer dieser Diagnoseinformation vorausgehenden Diagnoseinformation unterscheidet; oder
- Feststellen, ob sich ein aktueller Geräteparameter aufgrund einer Änderung eines anderen Geräteparameters verändert hat;
wobei das Grenzstanderfassungsgerät (3, 14) ferner dazu eingerichtet ist, wenn es feststellt, dass sich der aktuelle Messwert, die aktuelle Diagnoseinformation oder der aktuelle Geräteparameter verändert hat, dies in einem Merker zu vermerken;
wobei die Steuereinheit ausgeführt ist zum:
- Abrufen und Prüfen des Merkers;
- Treffen einer Entscheidung nach Prüfen des Merkers, ob ein Abrufen des aktuellen Messwerts, der aktuellen Diagnoseinformation oder des aktuellen Geräteparameters beim Grenzstanderfassungsgerät erfolgt oder nicht; und
- Abrufen des aktuellen Messwerts, der aktuellen Diagnoseinformation oder des aktuellen Geräteparameters beim Grenzstanderfassungsgerät nur dann, wenn das Grenzstanderfassungsgerät einen Unterschied zwischen den Messwerten oder den Diagnoseinformationen oder eine Veränderung des Geräteparameters festgestellt hat.

10. Durchflussmesssystem, aufweisend:
ein Durchflussmessgerät; und
eine über eine Kommunikationsschnittstelle mit dem Durchflussmessgerät verbundene Steuereinheit;
wobei das Durchflussmessgerät ausgeführt ist zum:
- Feststellen, ob sich ein aktueller Messwert, den das Durchflussmessgerät in einer Messung erfasst hat, von einem in einer dieser Messung vorausgehenden Messung erfassten Messwert unterscheidet; oder
- Feststellen, ob sich eine aktuelle Diagnoseinformation, die das Durchflussmessgerät erzeugt hat, von einer dieser Diagnoseinformation vorausgehenden Diagnoseinformation unterscheidet; oder
- Feststellen, ob sich ein aktueller Geräteparameter aufgrund einer Änderung eines anderen Geräteparameters verändert hat;
wobei das Durchflussmessgerät (3, 14) ferner dazu ausgeführt ist, wenn es feststellt, dass sich der aktuelle Messwert, die aktuelle Diagnoseinformation oder der aktuelle Geräteparameter verändert hat, dies in einem Merker zu vermerken;
wobei die Steuereinheit ausgeführt ist zum:
- Abrufen und Prüfen des Merkers;
- Treffen einer Entscheidung, ob ein Abrufen des aktuellen Messwerts, der aktuellen Diagnoseinformation oder des aktuellen Geräteparameters beim Durchflussmessgerät erfolgt oder nicht; und
- Abrufen des aktuellen Messwerts, der aktuellen Diagnoseinformation oder des aktuellen Geräteparameters beim Durchflussmessgerät nur dann, wenn das Durchflussmessgerät einen Unterschied zwischen den Messwerten oder den Diagnoseinformationen oder eine Veränderung des Geräteparameters festgestellt hat.

## Claims

1. A fill level measurement system (100), comprising:
a fill level measuring device (3, 14); and
a control unit (1, 13) coupled to the fill level measuring device via a communication interface;
wherein the fill level measuring device is configured to:
- determine whether a current measured value, recorded by the fill level measuring device in a measurement, differs from a measured value recorded in a measurement preceding said measurement; or
- determine whether a current item of diagnostic information generated by the fill level measuring device, differs from an item of diagnostic information preceding said item of diagnostic information; or
- determine whether a current device parameter has changed due to a change in a further device parameter;
wherein the fill level measuring device (3, 14) is further configured to record in a flag when it has determined that the current measured value, the current item of diagnostic information or the current device parameter has changed;
wherein the control unit is configured to:
- retrieve and check the flag;
- upon checking the flag, decide whether or not the current measured value, the current item of diagnostic information or the current device parameter is to be retrieved; and
- retrieve the current measured value, the current item of diagnostic information or the current device parameter of the fill level measuring device only if the fill level measuring device has determined a difference between the measured values or between the items of diagnostic information or a change in the device parameter.

2. The fill level measurement system of claim 1,
wherein the control unit (1, 13) is configured to transmit the further device parameter to the fill level measuring device (3, 14) before the fill level measuring device performs the determination.

3. The fill level measurement system of one of the preceding claims,
wherein the fill level measuring device is configured to determine, based on identifying the further device parameter in a list, whether the current device parameter has change due to the change in the further device parameter.

4. The fill level measurement system of one of the preceding claims,
wherein the fill level measuring device (3, 14) is configured to perform the determination only if a new measured value has been recorded, if a new item of diagnostic information has been generated or if the control unit has triggered the change of a device parameter by writing the device parameter into a memory of the fill level measuring device.

5. The fill level measurement system of one of the preceding claims,
wherein the control unit (1, 13) is configured to retrieve a complete set of device parameters of the fill level measuring device when the fill level measuring device has determined a change of the current device parameter.

6. The fill level measurement system of one of the preceding claims,
wherein the control unit (1, 13) is configured to check whether the fill level measuring device (3, 14) has performed the determination.

7. The fill level measurement system of one of the claims 1 to 6,
wherein the fill level measuring device (3, 14) is configured to automatically inform the control unit (1, 13) when the determination has been performed.

8. A pressure measuring system (3, 14) comprising:
a pressure measuring device; and
a control unit coupled to the pressure measuring device via a communication interface;
wherein the pressure measuring device is configured to:
- determine whether a current measured value, recorded by the pressure measuring device in a measurement, differs from a measured value recorded in a measurement preceding said measurement; or
- determine whether a current item of diagnostic information generated by the pressure measuring device, differs from an item of diagnostic information preceding said item of diagnostic information; or
- determine whether a current device parameter has changed due to a change in a further device parameter;
wherein the pressure measuring device (3, 14) is further configured to record in a flag when it has determined that the current measured value, the current item of diagnostic information or the current device parameter has changed;
wherein the control unit is configured to:
- retrieve and check the flag;
- upon checking the flag, decide whether or not the current measured value, the current item of diagnostic information or the current device parameter is to be retrieved; and
- retrieve the current measured value, the current item of diagnostic information or the current device parameter of the pressure measuring device only if the pressure measuring device has determined a difference between the measured values or between the items of diagnostic information or a change in the device parameter.

9. A limit detection system (3, 14) comprising:
a limit detection device; and
a control unit coupled to the limit detection device via a communication interface;
wherein the limit detection device is configured to:
- determine whether a current measured value, recorded by the limit detection device in a measurement, differs from a measured value recorded in a measurement preceding said measurement; or
- determine whether a current item of diagnostic information generated by the limit detection device, differs from an item of diagnostic information preceding this item of diagnostic information; or
- determine whether a current device parameter has changed due to a change in a further device parameter;
wherein the limit detection device (3, 14) is further configured to record in a flag when it has determined that the current measured value, the current item of diagnostic information or the current device parameter has changed;
wherein the control unit is configured to:
- retrieve and check the flag;
- upon checking the flag, decide whether or not the current measured value, the current item of diagnostic information or the current device parameter is to be retrieved; and
- retrieve the current measured value, the current item of diagnostic information or the current device parameter of the limit detection device only if the limit detection device has determined a difference between the measured values or between the items of diagnostic information or a change in the device parameter.

10. A flow measuring system comprising:
a flow measuring device; and
a control unit coupled to the flow measuring device via a communication interface;
wherein the flow measuring device is configured to:
- determine whether a current measured value, recorded by the flow measuring device in a measurement, differs from a measured value recorded in a measurement preceding said measurement; or
- determine whether a current item of diagnostic information generated by the flow measuring device, differs from an item of diagnostic information preceding said item of diagnostic information; or
- determine whether a current device parameter has changed due to a change bin further device parameter;
wherein the flow measuring device (3, 14) is further configured to record in a flag when it has determined that the current measured value, the current item of diagnostic information or the current device parameter has changed;
wherein the control unit is configured to:
- retrieve and check the flag;
- upon checking the flag, decide whether tor not the current measured value, the current item of diagnostic information or the current device parameter is to be retrieved; and
- retrieve the current measured value, the current item of diagnostic information or the current device parameter of the flow measuring device only if the flow measuring device has determined a difference between the measured values or between the items of diagnostic information or a change in the device parameter.

## Revendications

1. Système de mesure de niveau de remplissage (100) comprenant:
un appareil de mesure de niveau de remplissage (3, 14) ; et
une unité de contrôle (1, 13) relié à l'appareil de mesure de niveau de remplissage via une interface de communication ;
selon lequel l'appareil de mesure de niveau de remplissage est exécuté afin de :
- constater, si une valeur de mesure actuelle se différencie d'une valeur mesuré précédemment à cette mesure ; ou
- constater, si une information de diagnostique actuelle générée par l'appareil de mesure de niveau de remplissage se différencie d'une information de diagnostique précédente; ou
- constater, si un paramètre d'appareil actuel a été modifié en raison d'une modification d'un autre paramètre d'appareil;
selon lequel l'appareil de mesure de niveau de remplissage (3, 14) est de plus configuré pour indiquer dans un indicateur, lorsque constat est fait que la valeur de mesure actuelle, l'information de diagnostique actuelle ou le paramètre d'appareil actuel s'est modifié ;
selon lequel l'unité de contrôle est configurée pour :
- appeler et vérifier l'indicateur ;
- prendre une décision suite à la vérification de l'indicateur, si la récupération de la valeur de mesure actuel, de l'information de diagnostique actuelle ou du paramètre d'appareil actuel a lieu ou non ; et
- récupérer la valeur de mesure actuelle, l'information de diagnostique actuelle ou le paramètre d'appareil actuel de l'appareil de mesure de niveau de remplissage, uniquement lorsque l'appareil de mesure de niveau de remplissage a constaté une différence entre les valeurs de mesure, les informations de diagnostique ou une modification des paramètres d'appareil.

2. Système de mesure de niveau de remplissage selon la revendication 1,
selon lequel l'unité de contrôle (1, 13) est configurée pour transmettre les autres paramètres d'appareil à l'appareil de mesure de niveau de remplissage (3, 14) avant que l'appareil de mesure de niveau de remplissage effectue la constatation.

3. Système de mesure de niveau de remplissage selon l'une quelconque des revendications précédentes,
selon lequel l'appareil de mesure de niveau de remplissage est configuré pour constater par identification des autres paramètres d'appareil situés sur une liste prévue à cet effet, si un paramètre d'appareil actuel a été modifié en raison d'une modification d'un autre paramètre d'appareil.

4. Système de mesure de niveau de remplissage selon l'une quelconque des revendications précédentes,
selon lequel l'appareil de mesure de niveau de remplissage (3, 14) est configuré pour effectuer la constatation lorsque qu'une nouvelle valeur de mesure a été prise, lorsque une nouvelle information de diagnostique a été générée, ou lorsque l'unité de contrôle a provoqué la modification d'un paramètre d'appareil en écrivant le paramètre d'appareil sur une mémoire de l'appareil de mesure de niveau de remplissage.

5. Système de mesure de niveau de remplissage selon l'une quelconque des revendications précédentes,
selon lequel l'unité de contrôle (1, 13) est configuré pour récupérer un jeu complet de paramètre d'appareil de l'appareil de mesure de niveau de remplissage, lorsque l'appareil de mesure de niveau de remplissage a constaté une modification du paramètre d'appareil actuel.

6. Système de mesure de niveau de remplissage selon l'une quelconque des revendications précédentes,
selon lequel l'unité de contrôle (1, 13) est configuré pour vérifier si l'appareil de mesure de niveau de remplissage (3, 14) a exécuté la constatation.

7. Système de mesure de niveau de remplissage selon l'une quelconque des revendications 1 à 6,
selon lequel l'appareil de mesure de niveau de remplissage (3, 14) est configuré pour informer l'unité de contrôle (1, 13) de manière autonome lorsque la constatation a été exécutée.

8. Système de mesure de pression (3, 14) comprenant :
un appareil de mesure de pression ; et
une unité de contrôle reliée avec l'appareil de mesure de pression via une interface de communication ;
selon lequel l'appareil de mesure de pression est configuré pour :
- constater, si une valeur de mesure actuelle recueillie par l'appareil de mesure de pression lors d'une mesure, se différencie d'une valeur mesuré précédemment à cette mesure ; ou
- constater, si une information de diagnostique actuelle générée par
l'appareil de mesure de pression se différencie d'une information de diagnostique précédente; ou
- constater, si un paramètre d'appareil actuel a été modifié en raison d'une modification d'un autre paramètre d'appareil;
selon lequel l'appareil de mesure de pression (3, 14) est de plus configuré pour indiquer dans un indicateur, lorsque constatation est faite que la valeur de mesure actuelle, l'information de diagnostique actuelle ou le paramètre d'appareil actuel s'est modifié ;
selon lequel l'unité de contrôle est configurée pour :
- appeler et vérifier l'indicateur ;
- prendre une décision suite à la vérification de l'indicateur, si la récupération de la valeur de mesure actuel, de l'information de diagnostique actuelle ou du paramètre d'appareil actuel a lieu ou non ; et
- récupérer la valeur de mesure actuelle, l'information de diagnostique actuelle ou le paramètre d'appareil actuel de l'appareil de mesure de pression, uniquement lorsque l'appareil de mesure de pression a constaté une différence entre les valeurs de mesure, les informations de diagnostique ou une modification des paramètres d'appareil.

9. Système de détection de niveau (3, 14) comprenant :
un appareil de détection de niveau ; et
une unité de contrôle reliée avec l'appareil de détection de niveau via une interface de communication ;
selon lequel l'appareil de détection de niveau est configuré pour :
- constater, si une valeur de mesure actuelle recueillie par l'appareil de détection de niveau lors d'une mesure, se différencie d'une valeur mesuré précédemment à cette mesure ; ou
- constater, si une information de diagnostique actuelle générée par l'appareil de détection de niveau se différencie d'une information de diagnostique précédente; ou
- constater, si un paramètre d'appareil actuel a été modifié en raison d'une modification d'un autre paramètre d'appareil;
selon lequel l'appareil de détection de niveau (3, 14) est de plus configuré pour indiquer dans un indicateur, lorsque constatation est faite que la valeur de mesure actuelle, l'information de diagnostique actuelle ou le paramètre d'appareil actuel s'est modifié ;
selon lequel l'unité de contrôle est configurée pour :
- appeler et vérifier l'indicateur ;
- prendre une décision suite à la vérification de l'indicateur, si la récupération de la valeur de mesure actuel, de l'information de diagnostique actuelle ou du paramètre d'appareil actuel a lieu ou non ; et
- récupérer la valeur de mesure actuelle, l'information de diagnostique actuelle ou le paramètre d'appareil actuel de l'appareil de détection de niveau, uniquement lorsque l'appareil de détection de niveau a constaté une différence entre les valeurs de mesure, les informations de diagnostique ou une modification des paramètres d'appareil.

10. Système de mesure de débit comprenant :
un appareil de mesure de débit; et
une unité de contrôle reliée avec l'appareil de mesure de débit via une interface de communication ;
selon lequel l'appareil de mesure de débit est configuré pour :
- constater, si une valeur de mesure actuelle recueillie par l'appareil de mesure de débit lors d'une mesure, se différencie d'une valeur mesuré précédemment à cette mesure ; ou
- constater, si une information de diagnostique actuelle générée par l'appareil de mesure de débit se différencie d'une information de diagnostique précédente; ou
- constater, si un paramètre d'appareil actuel a été modifié en raison d'une modification d'un autre paramètre d'appareil;
selon lequel l'appareil de mesure de débit (3, 14) est de plus configuré pour indiquer dans un indicateur, lorsque constatation est faite que la valeur de mesure actuelle, l'information de diagnostique actuelle ou le paramètre d'appareil actuel s'est modifié ;
selon lequel l'unité de contrôle est configurée pour :
- appeler et vérifier l'indicateur ;
- prendre une décision suite à la vérification de l'indicateur, si la récupération de la valeur de mesure actuel, de l'information de diagnostique actuelle ou du paramètre d'appareil actuel a lieu ou non ; et
- récupérer la valeur de mesure actuelle, l'information de diagnostique actuelle ou le paramètre d'appareil actuel de l'appareil de mesure de débit, uniquement lorsque l'appareil de mesure de débit a constaté une différence entre les valeurs de mesure, les informations de diagnostique ou une modification des paramètres d'appareil.
